# EUROPEAN PATENT APPLICATION

(11) **EP 4 534 351 A1**
(43) Date of publication of application: **09.04.2025**
(21) Application number: 24203467.6
(22) Date of filing: 30.09.2024
(51) Int. Cl.: B60R 1/00, B60K 35/22, B60K 35/81, B60R 1/22, G06T 5/70, G06T 5/90, H04N 23/695, H04N 23/667, H04N 23/76, H04N 23/81, H04N 23/86

(54) **ACTIVATION AND OPTIMIZATION OF A NIGHT MODE IN CAMERA MONITORING APPLICATIONS**

(30) Priority: 06.10.2023 DE 102023127318
(71) Applicant: MAN Truck & Bus SE, 80995 München (DE); Motherson Innovations Company Ltd., London EC2N 2AX (GB)
(72) Inventor: Schau, Philipp, 70327 Stuttgart (DE); Zaindl, Albert, 80995 München (DE); Benamar, Taha, 80995 München (DE); Paulig, Jan, 80995 München (DE)
(74) Representative: v. Bezold & Partner Patentanwälte - PartG mbB

(57) **Abstract**

The invention relates to a method for operating an image data processing device (16) of a vision system (10) of a vehicle (20). The method comprises receiving image data captured by at least one imaging device (12); receiving a condition-signal indicating a day-time condition or a night-time condition; and processing the received image data dependent on the received condition-signal. Further, the invention relates to a vision system (10) comprising an image data processing device (16) configured to perform said method and a vehicle (20) comprising said vision system (10).

## Description

The invention relates to a method for operating an image data processing device of a vision system of a vehicle, a vision system with a respective image data processing device, and a vehicle with a respective vision system.

It is known in the art to provide vehicles with camera-monitor systems (CMS) to facilitate vehicle operation. Such camera-monitor systems typically comprise a monitor device connected to at least one camera device. The at least one camera device is, thereby, usually configured to capture image data of the vehicle's surroundings, which is then displayed on the monitor device arranged within the vehicle.

The image quality, i.e. image signal processor (ISP), settings of camera monitoring systems are usually optimized for daylight scenarios. Using the same ISP settings for driving at night, often results in mediocre image quality (e.g. high color noise, low dynamic range, over/underexposure), which increases the risk for an accident due to fatigue, distraction, situational misjudgment.

A known approach to address this problem is to modify the operation settings of the monitor device, for example, by reducing the display brightness of the monitor device for night condition (dimming). Via decreasing the power of an LED backlight located behind the display, it is possible to prevent the driver of getting tired or getting distracted by a bright screen at night. However, the image content itself is usually not improved or adjusted. Consequently, the image quality factors (key performance indicators), such as color noise, dynamic range, exposure and/or white balance will remain insufficient.

The objective of the invention is to provide an improved way of providing image data, e.g. to a driver of a vehicle, preferably avoiding the disadvantages of conventional techniques. Preferably, it is an objective of the invention to provide image data of improved image quality, in particular, adapted for night-time conditions and/or the current situation.

These objectives are solved by the subject matters of the independent claims, respectively. Preferred embodiments and applications of the invention are covered by the dependent claims.

According to a first independent aspect, a method for operating an image data processing device is provided. Preferably, the image data processing device is an image data processing device of a vision system (e.g. a mirror replacement system) of a vehicle.

The method comprises receiving image data captured by at least one imaging device. The at least one imaging device may be part of the vehicle and/or the vision system of the vehicle. For example, the at least one imaging device may include one camera or several cameras, e.g. mounted on the vehicle. Preferably, the image data comprises rearward view image data captured (e.g. laterally) aside and/or behind of the vehicle. For example, the at least one imaging device may be configured to capture a class II view, a class IV view and/or a class V view according to the Directives 2003/97/EC and 2007/38/EC.

The method further comprises receiving a condition-signal, preferably indicating a day-time condition or a night-time condition. The condition-signal may be generated by a condition device of the vehicle and/or the vision system of the vehicle. For example, the condition device may be a brightness and/or light sensor. The brightness and/or light sensor may be configured to output a first condition-signal value indicating a day-time condition, when a brightness of the vehicle's surroundings is above a predefined value and to output a second condition-signal value indicating a night-time condition, when the brightness of the vehicle's surroundings is below that predefined value.

The method further comprises (e.g. automatically) processing (e.g. post-processing) the received image data (e.g. by the image data processing device) dependent on the received condition-signal. Consequently, the way the received image data are processed may differ depending on the received condition-signal, in particular, on whether said condition-signal indicates the day-time condition or the night-time condition. In this context, the step of processing may comprise altering and/or changing image processing settings based on the received condition-signal. For example, the step of processing may comprise adjusting a contrast and/or a brightness of the received image data. Preferably, the method further comprises outputting the processed image data, e.g. to a display device.

In contrast to known concepts, where solely the display properties (e.g. the intensity of an LED backlight) of a monitor device is adjusted (e.g. dimmed) for night-time conditions, the current solution advantageously adjusts the image content itself by respective processing of the captured image data. This enables advantageously much greater flexibility in actively modifying the image data by the image data processing device compared to a simple adjustment of the display appearance via the monitor device. By this, the image quality can be (e.g. automatically) optimized to a greater extent for the respective situation, which allows for a better adaption of the provided image data to the current needs of the driver.

According to a first aspect, the step of processing may differ depending on whether the received condition-signal indicates the day-time condition or the night-time condition. For example, the step of processing may comprise a day mode and a night mode. Preferably, the image processing settings used for processing the received image data differ dependent on whether the night-time condition (e.g. night mode) or day-time condition (e.g. day mode) is met or present. By way of example only, a contrast, digital gain and/or white balance of the received image data may be altered based on the received condition-signal and/or present (e.g. day or night) mode. Advantageously, this allows for adapting the image data to the current ambient light condition.

According to another aspect, the step of processing may comprise adjusting (e.g. enhancing and/or reducing) a contrast of the received image data. The term contrast may, for example, refer to the difference between light and dark areas of the image data. Adjusting the contrast may be performed globally (e.g. influencing the whole tonal range of the image data) and/or locally (e.g. influencing regions of the image data independently).

In addition or alternatively, the step of processing may comprise adjusting (e.g. increasing and/or decreasing) a digital gain of the received image data. The term digital gain may, for example, refer to a factor by which the image data is amplified after the digitizing process of the at least one imaging device. In contrast, the term analogue gain or gain may refer to the magnitude of amplification of an output voltage of the photodetectors of the at least one imaging device before sampling by an analogue digital converter.

In addition or alternatively, the step of processing may comprise adjusting (e.g. increasing and/or decreasing) a noise filtering of the received image data. For example, this may be done by using a per se known de-noising algorithm, like a spatial domain filter and/or Wiener filter. In this context, the term noise filtering may, for example, refer to remove noise from the image data, in particular, to restore the "true" image. Preferably, the adjusting of the noise filtering (e.g. dependent on the received condition-signal) includes altering a degree to which noise filtering is used and/or whether it is used at all.

According to another aspect, the method may further comprise outputting (e.g. by the image data processing device) a control-signal for the at least one imaging device dependent on the received condition-signal. Thereby, the control-signal may cause the at least one imaging device to adjust at least one image capture setting (e.g. a frame rate, a (analogue) gain, an exposure time, and/or exposure threshold) of the at least one imaging device. For example, when the received condition-signal indicates the night-time condition, the outputted control-signal may cause the at least one imaging device to decrease the frame rate (e.g. from 50 fps to 25 fps) and/or to increase the exposure time. In addition to the aforementioned adjustment of the image processing settings, this aspect advantageously allows for actively modifying the way the (e.g. raw) image data is captured, thus further increasing the flexibility for adapting/optimizing the image quality for the current conditions.

According to another aspect, the method may further comprise receiving a situation-signal. The situation-signal may be generated by a situation detection device of the vehicle and/or the vision system of the vehicle. The situation-signal may indicate a current speed of the vehicle, a gear selection of the vehicle (e.g. forward or reverse), and/or an operating state of the vehicle (e.g. manoeuvring, cornering, and/or motorway driving). Thereby, the step of processing is further dependent on the received situation-signal. Preferably, the processing of the received image data may, therefore, depend on the received condition-signal and the received situation-signal. For example, the processing within the night mode may differ on whether the vehicle is reverse parking or travelling on a motorway. While in the first case, for example, the contrast and brightness of the image data (e.g. within the night mode/settings) may be enhanced by the image data processing device (e.g. so that the driver can see as many details as possible), in the second case the contrast and brightness of the image data (within the night mode/settings) may be lowered (e.g. so that the driver gets less distracted). Advantageously, this allows for adjusting the image quality optimally to the respective driving situation, such that the situational awareness of the driver for various scenarios can be improved.

According to another aspect, the step of processing (e.g. the received image data) may comprise reducing a contrast, a digital gain, and/or a brightness of the received image data, when the received situation-signal indicates a long-distance drive of the vehicle. The respective situation-signal may, for example, be generated when the vehicle is travelling at a speed of more than 60 km/h. This has the advantage of preventing driver fatigue and/or distraction by the displayed image data.

In addition or alternatively, the step of processing (e.g. the received image data) may also comprise increasing a contrast, a digital gain, and/or a brightness of the received image data, when the received situation-signal indicates a manoeuvring (e.g. a parking procedure) of the vehicle. The respective situation-signal may, for example, be generated when the vehicle is travelling reverse and/or at a speed below 25 km/h. This has the advantage that the driver can recognise objects and/or obstacles very well in the displayed image data.

According to another aspect, the method further comprises selecting an image data processing mode from predefined possible image data processing modes dependent on the received situation-signal. For example, the predefined possible image data processing modes may comprise at least three, preferably at least four, (e.g. different) predefined possible image data processing modes. By way of example only, the predefined possible image data processing modes may include a reverse driving mode, a motorway driving mode, a manoeuvring mode and/or an inner-city driving mode. Each of the predefined possible image data processing modes may preferably be associated with a certain way of processing the received image data and/or certain image processing settings, respectively. Thereby, the step of processing may be performed in accordance with the selected image data processing mode. Advantageously, this allows for adjusting the image quality optimally to the respective driving situation.

According to another aspect, the predefined possible image data processing modes may include a reverse driving mode. For example, the reverse driving mode may comprise generating a wide-angle view of the received image data. Preferably, only rearward image data is processed during the processing step in the reverse driving mode. This may be achieved by selecting (e.g. only) the rearward image data from the received image data, and/or by controlling the at least one imaging device such that (e.g. only) rearward image data is received by the image data processing device. This has the advantage that the driver can be provided with a large overview of the rearward area, allowing him to easily detect possible objects or obstacles.

In addition or alternatively, the predefined possible image data processing modes may include a motorway driving mode. For example, the motorway driving mode may comprise generating a zoom view of the received image data. Preferably, the zoom view focusses on a specific portion of the captured image data, e.g. relating to a distant region of the vehicle's surroundings. By way of example only, the step of processing in accordance with the motorway driving mode may include processing the received image data such that the class II view is enlarged and/or the class V view reduced. This has the advantage that the driver can be provided with the relevant area of interest without additional distracting information regarding the direct surroundings.

In addition or alternatively, the predefined possible image data processing modes may include a manoeuvring mode. For example, the manoeuvring mode may comprise generating a wide-angle view of the received image data. Preferably, the step of processing in accordance with the manoeuvring mode may include processing the received image data such that information about the lateral area aside to the vehicle is enlarged and/or made more prominent. By way of example only, the step of processing in accordance with the manoeuvring mode may include processing the received image data such that the class V view is enlarged, while the class II view and/or class IV view is reduced. This has the advantage that the driver can be provided with a large overview of the lateral area, allowing him to easily detect possible objects or obstacles, e.g. during a cornering manoeuvre.

According to another aspect, the predefined possible image data processing modes may further include a default mode (e.g. an inner-city driving mode). For example, the default mode may be enabled by default unless the received situation-signal indicates a specific operating state of the vehicle, e.g. reverse driving, motorway driving, and/or manoeuvring. In this context, the aforementioned the reverse driving mode may preferably define a higher contrast, brightness and/or digital gain compared to the default mode. In addition or alternatively, the afore-mentioned the motorway driving mode may preferably define a lower contrast, brightness and/or digital gain compared to the default mode. In addition or alternatively, the aforementioned manoeuvring mode may define a higher contrast, brightness and/or digital gain compared to the default mode. Advantageously, this again allows for avoiding distraction or fatigue in driving situations in which little additional image information is required, but for providing well recognisable image information in parking and/or cornering situations.

According to another aspect, the received image data may comprise data relating to different field of views. For example, the received image data may comprise a class I view, a class II view, a class III view, a class IV view, a class V view and/or a class VI view (e.g. according to the Directive 2003/97/EC and 2007/38/EC). The different field of views preferably correspond to different viewing directions and/or views of the vehicle's surroundings of a driver, when sitting on the driving seat of the vehicle in a normal driving position. In addition or alternatively, the different field of views preferably correspond to views of the driver, which would actually be displayed in (e.g. legally required) mirror devices of the vehicle. In this context, the step of processing (e.g. the received image data) may preferably comprise merging the different field of views in a combined view. For example, the different field of views may be combined and/or adjoined to each. The combined view preferably provides a, preferably continuous, (possibly distorted) visualization of the different field of views in a single image. Advantageously, this allows to provide the driver with a single representation of the vehicle's surroundings, including the relevant information for safe vehicle guidance.

According to another aspect, the relative portions of the different field of views in the combined view are varied depending on the selected image data processing mode. Preferably, the step of merging thus comprises varying the relative portions of the different field of views in the combined view depending on the selected image data processing mode. The expression "relative portion" may thereby correspond, for example, to the relative areas that the different views should occupy when displayed (e.g. on the display device).

For example, in the motorway driving mode, the class V view or portion of the class V view may be decreased (e.g. reduced) compared to the default mode. In other words, the different field of views may be merged such in the motorway driving mode that the class V view takes less portion of the combined view, as in the case of the default mode. In addition or alternatively, in the motorway driving mode, the class IV view and/or class II may be increased (e.g. magnified and/or enlarged) compared to the default mode.

In addition or alternatively, in the manoeuvring mode, the class V view or portion of the class V view may be increased (e.g. enlarged and/or magnified) compared to the default mode. In other words, the different field of views may be merged such in the manoeuvring mode that the class V view takes a greater portion of the combined view, as in the case of the default mode. In addition or alternatively, in the manoeuvring mode, the class IV view and/or class II may be decreased (e.g. reduced) compared to the default mode. Advantageously, this allows for providing the relevant vehicle's surroundings information for the driver in a situation specific way, so that the regions in particular relevant for the current situation can be displayed larger.

According to another aspect, the method may further comprise receiving a display-brightness-signal from a display device. For example, the display-brightness-signal may indicate a brightness of a display (e.g. LCD display) of the display device, in particular a brightness of a backlight of a display of the display device. Preferably, the display-brightness-signal, thereby, indicates a (e.g. manually adjusted or adjustable) brightness level of the display. In this context, the step of processing may be performed dependent on the received display-brightness-signal. Preferably, the step of processing is, thereby, performed dependent on the received display-brightness-signal, such that a contrast of the received image data is increased when the display-brightness-signal indicates an increase of the brightness of the display and/or a contrast of the received image data is decreased when the display-brightness-signal indicates a decrease of the brightness of the display. Thus, the processing and/or image processing settings may be coupled with a (e.g. manual) brightness adjustment of the display of the display device. Advantageously, this allows for a synergetic interplay between the backlight brightness and image processing settings.

According to another aspect, the method may further comprise receiving a user-request signal. The user-request signal may be generated by a control device of the vehicle and/or the vision system of the vehicle. For example, the control device may be arranged at the display device and/or integrated in the display device. By way of example, the control device may be configured as a touch sensitive surface of the display. The user-request signal may preferably indicate a command and/or request of a user. In this context, the method may further comprise adjusting image processing settings (e.g. of the image data processing device), e.g. used for processing the received image data, dependent on the received user-request signal. For example, this may comprise selecting another (e.g. currently not selected) image data processing mode and/or adjusting the (e.g. currently) selected image data processing mode dependent on the received user-request signal. Advantageously, by this, the image data processing mode can be actively chosen and/or altered by a user. In addition or alternatively, the method and/or the step of adjusting the image processing settings may comprise adjusting a contrast, a digital gain, and/or a noise filtering of the received image data dependent on the received user-request signal. Advantageously, the user may therefore be able to actively adjust the way the received image data are processed. In addition or alternatively, the method and/or the step of adjusting the image processing settings may comprise adjusting a section of the received image data to be displayed dependent on the received user-request signal. For example, the user may be able to switch from a zoom view to a wide-angle view and vice versa.

According to another aspect, the method may further comprise outputting the processed image data (e.g. by the image data processing device). For example, the image data processing device may comprise a respective output, at which the processed image data may be provided. Preferably, the processed image data are outputted for displaying on a display device. For example, the processed image data may be outputted in a data format readable by the display device. The display device may, thereby, be part of the vehicle and/or the vision system (e.g. the mirror replacement system) of the vehicle. The processed image data may include image data of the class II view, the class IV view and/or the class V view. The display device may be configured for displaying the class II, IV and/or V view simultaneously, e.g. on the same monitor and/or display of the display device.

According to another aspect, the method may further comprise generating a zoom view and/or a wide-angle view of the received image data dependent on the received situation-signal. Preferably, the zoom view focusses on a specific portion of the captured image data, while the wide-angle view, preferably, displays a whole detection range of the at least one imaging device. Advantageously, this allows for a providing a situation-specific view of the received image data.

According to a further independent aspect, a vision system is provided. Preferably, the vision system is a vision system for a vehicle (e.g. a car or truck).

The vision system comprises at least one imaging device (e.g. a camera) configured to capture image data. Preferably, the image data comprises rearward view image data captured (e.g. laterally) aside and/or behind of the vehicle. The at least one imaging device may be part of the vehicle and/or arranged at the vehicle. For example, the at least one imaging device may be mounted in or on a camera arm, which extends laterally-outwardly from the vehicle body. Particularly preferred, the at least one imaging device is configured to capture one or more legally-prescribed fields of view, e.g. a class II view, a class IV view, and/or a class V view according to the Directive 2003/97/EC and 2007/38/EC.

The vision system further comprises a condition device (e.g. a brightness and/or light sensor). The condition device is configured to generate a condition-signal, preferably indicating a day-time condition or a night-time condition. The condition device may be part of the vehicle and/or arranged at the vehicle.

The vision system further comprises an image data processing device (e.g. a processor). The image data processing device is configured to receive the captured image data and the generated condition-signal. For this, the image data processing device may be connected to the at least one imaging device and the condition device, e.g. via respective cable or wireless signal connections. The image data processing device is further configured to process the received image data dependent on the received condition-signal. For example, the image data processing device may be configured to perform a method as described within this document.

Consequently, the aspects described herein in connection with the method are also to be disclosed and claimable in connection with the vision system just described and vice versa.

According to an aspect, the vision system may further comprise a display device. The display device may be configured to display the processed image data. For example, the display device may comprise a display (e.g. an LCD display), preferably configured to display the processed image data. The display device may be part of the vehicle and/or arranged at the vehicle. For example, the display device may be arranged inside a driver's cab of the vehicle and/or at a cockpit of the vehicle, preferably within the driver's field of vision. The display device may be connected with the image data processing device, e.g. via a cable or wireless signal connection. As outlined before, the display device may be configured for displaying different fields of views, e.g. the class II, IV and/or V view, simultaneously, e.g. on the very same display of the display device.

According to a further independent aspect, a (e.g. motor) vehicle is provided. Preferably, the vehicle may be a utility vehicle, like, for example, a truck or bus. Thus, the vehicle may, for example, by virtue of its construction and equipment, be specially designed for the transport of goods, for the transport of persons and/or for towing one or more (e.g. agricultural) trailer vehicles. The vehicle comprises a vision system as described herein. Consequently, the aspects described herein in connection with the vision system and the method are also to be disclosed and claimable in connection with the vehicle and vice versa.

According to an aspect, the at least one imaging device may be configured to capture different field of views, preferably a class II view, a class IV view, and/or a class V view (e.g. according to the Directive 2003/97/EC and 2007/38/EC). For example, the at least one imaging device may comprise several cameras, e.g. mounted in or on a common camera arm. The several cameras may be aligned differently and/or each have different viewing angles. In this context, the image data processing device may be configured to select image data of a subset of the several cameras and/or to merge/combine the image data of the several cameras.

In addition or alternatively, the vision system may be part of a mirror replacement system of the vehicle, in particular an external rear-view mirror replacement system. The term mirror replacement system may, for example, refer to a (e.g. principally known) driver assistance system, in which (e.g. legally required) mirror devices (e.g. an external rear-view mirror) of the vehicle are replaced by one or more imaging devices, wherein the captured images of these imaging devices are displayed on a display device within the vehicle. Thereby, the imaging devices capture, in particular, a section of the vehicle's surroundings that would actually be displayed in the respective (e.g. legally required) mirror device. For example, the at least one imaging device may be configured to capture image data corresponding to a main exterior rear mirror (e.g. field of view II), a wide-angle exterior rear mirror (e.g. field of view IV), and/or a close proximity or ramp mirror (e.g. field of view V). Consequently, the at least one imaging device may comprise and/or be at least one mirror replacement imaging device.

In addition or alternatively, the vision system may be operable to display a surround view of the vehicle's surroundings on the display device. The term surround view, which may also referred to as bird's-eye view, may for example, refer to a (e.g. principally known) driver assistance system, in which the driver is provided with an (e.g. artificial) image of the vehicle's surroundings and/or the vehicle from a bird's-eye view. In this context, the at least one imaging device may comprise several surround view cameras (e.g. including a front view camera, a rear view camera, and/or at least one side view camera), wherein preferably the surround view cameras may be aligned in different directions. In addition or alternatively, the at least one imaging device may be part of a combination of two or more imaging devices, whose image data are merged/combined together to form a bird's-eye view of the vehicle. In this context, the at least one imaging device may preferably comprise at least four imaging devices (e.g. surround view cameras).

The aspects and features of the disclosure described before can be combined in any manner. Further details and advantages are described below with reference to the accompanying figures. The figures show:
- Figure 1: a schematic representation of a vehicle according to an embodiment;
- Figure 2: two schematic representations of processed image data in the default mode according to an embodiment, wherein different image processing settings are used;
- Figure 3: two schematic representations of processed image data in the motorway driving mode, wherein different image processing settings are used; and
- Figure 4: schematic representations of processed image data in the default, manoeuvring, and motor driving mode.
The embodiments shown in Figures 1, 2, 3, and 4 correspond at least in part, so that similar or identical parts are provided with the same reference signs and reference is also made to the description of the other embodiments or figures for their explanation in order to avoid repetitions.

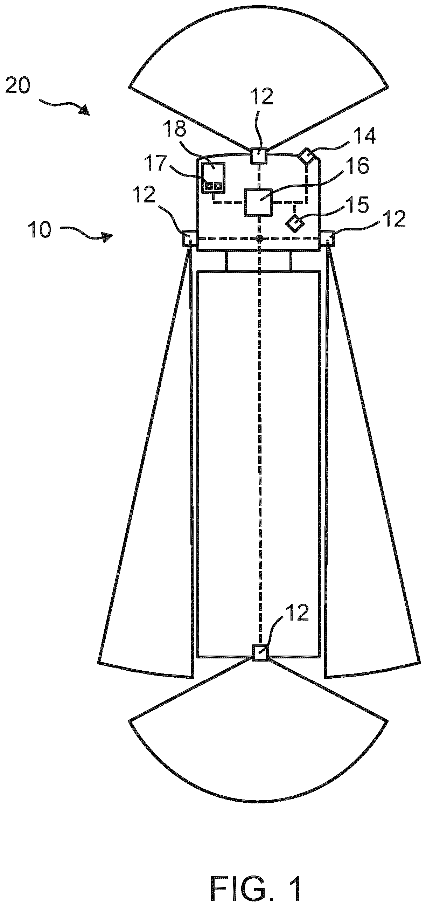

Figure 1 shows a vehicle 20 according to an embodiment of the disclosure. By way of example only, the vehicle 20 is depicted as a truck in Figure 1. The vehicle 20 may be, however, any type of vehicle, like, for example, a car, a bus, a construction machine, an agricultural machine or the like.

The vehicle 20 comprises at least one imaging device 12, a condition device 14, and an image data processing device 16.

The afore-mentioned components may be connected to each other. For example, the image data processing device 16 can be connected to the at least one imaging device 12 and the condition device 14, e.g. by respective signal connections (dotted lines). Each of the respective signal connections can be a cable connection and/or a wireless connection.

Further, the at least one imaging device 12, the condition device 14, and the image data processing device 16 may form a vision system 10 and/or may be part of a vision system 10 (e.g. a mirror replacement system) of the vehicle 20. Thus, the vehicle 20 may comprise a vision system 10, including the at least one imaging device 12, the condition device 14, and the image data processing device 16.

The at least one imaging device 12 may be configured to capture (e.g. real-time) image data. For example, the at least one imaging device 12 can comprise one camera or several cameras. The one camera or several cameras may be mounted in or on a camera arm, which preferably extends laterally-outwardly from the vehicle body (e.g. laterally-outwardly from a cab of the vehicle). The at least one imaging device 12 may include at least one image sensor (e.g. a complementary metal-oxide-semiconductor (CMOS) image sensor and/or a charged-couple device (CCD) image sensor). The at least one imaging device 12 may include one or more optical elements (e.g. a lens, a mechanical shutter, an electrical shutter, and/or an aperture).

The at least one imaging device 12 may be configured for detecting optical information of the vehicle's surroundings. In particular, the at least one imaging device 12 may be configured to capture forward image data (of the vehicle's surroundings) ahead of the vehicle 20, to capture lateral image data (of the vehicle's surroundings) besides (e.g. left and/or right besides) the vehicle 20, and/or to capture rearward image data (of the vehicle's surroundings) behind the vehicle 20. Preferably, the at least one imaging device 12 may be configured to capture a rear facing side view of the vehicle's surroundings (along the vehicle 20). This rear facing side view may at (e.g., due to an arrangement of the at least one imaging device 12 in front of the windshield of the vehicle 20) least in parts also include portions of the vehicle's surroundings lying (directly) in front and/or laterally in front of the vehicle. The at least one imaging device 12 may be configured for capturing, e.g. according to the Directive 2003/97/EC and 2007/38/EC legally required, fields of views of the vehicle's surroundings.

For example, the at least one imaging device 12 may be configured for capturing a class II view, which may include a distant rear view laterally along the vehicle 20. The class II view may correspond to a field of view conventionally captured by a main exterior rear mirror of the vehicle 20.

In addition or alternatively, the at least one imaging device 12 may be configured for capturing a class IV view, which may include a (rearward-facing) wide angle view of the lateral surrounding of the vehicle 20. Compared to the class II view, the class IV view may cover a shorter but wider lateral part of the vehicle's surroundings. The class IV view may correspond to a field of view conventionally captured by a wide-angle exterior mirror of the vehicle 20.

In addition or alternatively, the at least one imaging device 12 may be configured for capturing a class V view, which may include a close-proximity view of a lateral region besides (and possibly partly in front of) a cab of the vehicle 20, in particular at a lateral region besides the passenger's side of the vehicle 20 and/or cab of the vehicle 20. The lateral region may start at the leading edge of the vehicle 20. The class IV view may correspond to a field of view conventionally captured by a ramp mirror and/or side area safety mirror of the vehicle 20.

Consequently, the (received) image data may comprise class II view image data, class IV view image data, and/or class V image data. In addition or alternatively, the (received) image data may also comprise class I view image and/or class III view image data.

Further, the at least one imaging device 12 may comprise several (e.g. four) imaging devices 12. The several imaging devices 12 may be arranged distributed at the vehicle 20. The several imaging devices 12 may be orientated differently and/or may have different fields of observation, respectively. For example, the at least one imaging device 12 may comprise a rear view camera, a front view camera, and/or a lateral view camera. The at least one imaging device 12 or the several imaging devices 12 may form part of a mirror replacement system of the vehicle 20 (e.g. replacing an external rear-view mirror) and/or a birdview system of the vehicle 20.

The condition device 14 may be configured to generate and/or output a condition-signal. Preferably, the condition-signal may indicate a day-time condition or a night-time condition. In addition or alternatively, the condition-signal may also indicate a light condition of the vehicle's surroundings. For example, the condition-signal may have a first condition-signal value, when a brightness of the vehicle's surroundings is above a predefined value, and a second, when the brightness of the vehicle's surroundings is below this predefined value. In this context, the condition device 14 may comprise a brightness and/or light sensor. In addition or alternatively, the condition device 14 may also comprise a clock, a timer and/or an interface configured to receive an external input indicating a day-time condition and/or night-time condition.

The image data processing device 16 may be configured to receive input from the at least one imaging device 12 and the condition device 14. In particular, the image data processing device 16 may be configured to receive the captured image data from the at least one imaging device 12 and the generated condition-signal from the condition device 14. The image data processing device 16 may include a memory and/or at least one processor (e.g., an Image Signal Processor - ISP) for processing images and/or image data. The memory can be configured to store instructions, which can be executed by the at least one processor.

The image data processing device 16 may be configured to process the received image data. For example, the image data processing device 16 may be configured to alter the received image data (e.g. a quality and/or a key performance indicator of received image data) through image-processing. Preferably, the mage data processing device 16 may be configured to adjust or alter a contrast, a digital gain, a noise filtering, a white balance, a luminance, a brightness, and/or a sharpness of the received image data.

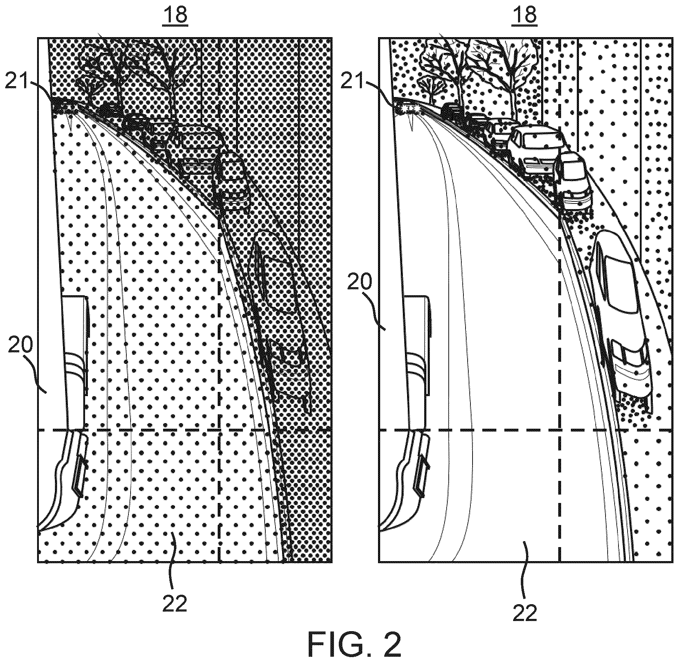

Thereby, the image data processing device 16 may be configured to process the received image data dependent on the received condition-signal. Thus, the image data processing device 16 may be configured to process the received image data differently depending on the received condition-signal, which will be described on more detail in the context of Figures 2, 3 and 4. In particular, the processing may differ depending on whether the received condition-signal indicates the day-time condition or the night-time condition. For example, the received condition-signal may trigger a day mode or a night mode of the image data processing device 16 for processing the received image data. Dependent on the condition-signal and/or the respective mode (day or night mode) image processing settings used for processing the received image data may vary. For example, the image data processing device 16 may be configured to adjust the contrast, digital gain, noise filtering, white balance, luminance, brightness, and/or sharpness of the received image data dependent on the received condition-signal and/or mode. In particular, the e image data processing device 16 may be configured to optimize the image quality respectively for day-time condition and/or night-time conditions. For example, the image data processing device 16 may be configured to increase the contrast and/or to decrease the brightness of the received image data when the received condition-signal indicates the night-time condition.

Furthermore, the image data processing device 16 may be configured to output a control-signal to the at least one imaging device 12. The control-signal may cause the at least one imaging device 12 to alter and/or adjust at least one image capture setting of the at least one imaging device 12. In this context, the term image capture setting may, for example, refer to (hardware or software) settings of the at least one imaging device 12, which determine the way the (e.g. raw) image data is captured by the at least one imaging device 12. For example, the at least one image capture setting may comprise a frame rate, a (analogue) gain, a black level, an exposure time, and/or exposure threshold of the at least one imaging device 12. Thereby, the frame rate may define a number of frames per second that the at least one imaging device 12 will attempt to deliver. The black level may define a level of brightness, which corresponds to the darkest value of the at least one imaging device 12. By adjusting the black level, a possible dark current may be compensated. The exposure time may define a length of time that the at least one imaging device 12 collects photons for each frame. The exposure threshold may define a level, where a saturation of the at least one imaging device 12 is reached. In addition or alternatively, the at least one image capture setting may also comprise a focus and/or aperture of the at least one imaging device 12.

In particular, the image data processing device 16 may be configured to output the control-signal to the at least one imaging device 12 dependent on the received signal. Thus, the image data processing device 16 may be configured to output the control-signal differently depending on the received condition-signal, which will be described in more detail in the context of Figures 2, 3 and 4. For example, the outputting may differ depending on whether the received condition-signal indicates the day-time condition or the night-time condition.

Further, the vehicle 20 may comprise a situation detection device 15. The situation detection device 15 may be connected with the image data processing device 16, e.g. by a respective signal connection (dotted line). The situation detection device 15 may be part of a vision system 10 of the vehicle 20. Thus, the vision system 10 may further comprise the situation detection device 15.

The situation detection device 15 may be configured to generate and/or output a situation-signal. The situation-signal may indicate a (e.g. current) speed, a gear selection and/or an operating state of the vehicle 20. For this, the situation detection device 15 may be connected to respective controllers and/or sensor devices of the vehicle 20, e.g. a speed sensor, a gear position sensor, and/or a steering angle sensor. Further, the situation detection device 15 may be configured to receive positioning data from a (e.g. GPS) positioning system of the vehicle. The situation detection device 15 may be configured to generate and/or output the situation-signal based on the information received from the controllers, sensor devices, and/or positioning system.

By way of example only, the situation-signal generated by the situation detection device 15 may have a first situation-signal value indicating a reverse driving of the vehicle 20, e.g. when a reverse gear of the vehicle 20 is engaged. The situation-signal may have a second situation-signal value indicating a motorway driving of the vehicle 20, e.g. when the speed of the vehicle 20 exceeds 60 km/h or one 100 km/h. The situation-signal may have a third situation-signal value indicating a manoeuvring of the vehicle 20, e.g. when the speed of the vehicle 20 is below 25 km/h and/or (strong) steering movements are present.

The image data processing device 16 may be further configured to process the received image data dependent on the received situation-signal. Thus, the image data processing device 16 may be configured to process the received image data differently depending on the received situation-signal. For example, the received situation-signal may trigger different modes of image data processing of the image data processing device 16 for processing the received image data. By way of example only, the night mode may (automatically) adapt to different situations and/or operating states of the vehicle 20 (during night), dependent on the situation-signal. Thereby, the image processing settings may change (automatically) for different driving speeds and directions (forward/reverse).

For example, different predefined image data processing modes may be stored and/or specified within the image data processing device 16. The predefined image data processing modes may, for example, include at least three, preferably at least four, predefined image data processing modes. The different predefined image data processing modes may define different image processing settings used for processing the received image data. The image data processing device 16 may, thereby, be configured to select an image data processing mode from, the predefined possible image data processing modes dependent on the received situation-signal. This may be achieved via predefined rules or allocation tables, which assign different values of the situation-signal to a corresponding image data processing mode. In addition or alternatively, also an optimisation method (e.g. a gradient-based Newton method and/or genetic optimisation) may be used. Further, the image data processing device 16 may be configured to process the received image data in accordance with the selected image data processing mode. For example, the way the received image data are processed and/or the used image processing settings may differ depending on the selected image data processing mode.

The predefined image data processing modes may comprise, for example, a default mode, a reverse driving mode, a motorway driving mode, and/or a manoeuvring mode.

The default mode, which is illustrated in Figure 2, may for example be an inner-city driving mode. The default mode may be enabled by default unless the situation-signal indicates another operating state of the vehicle, e.g. reverse driving, motorway driving, and/or manoeuvring. In addition or alternatively, the default mode may be selected by the image data processing device 16, when the received situation-signal indicates an inner-city driving of the vehicle. For example, the situation-signal may have a fourth situation-signal value indicating an inner-city driving of the vehicle, e.g. when the speed of the vehicle 20 is between 25 km/h and 60 km/h.

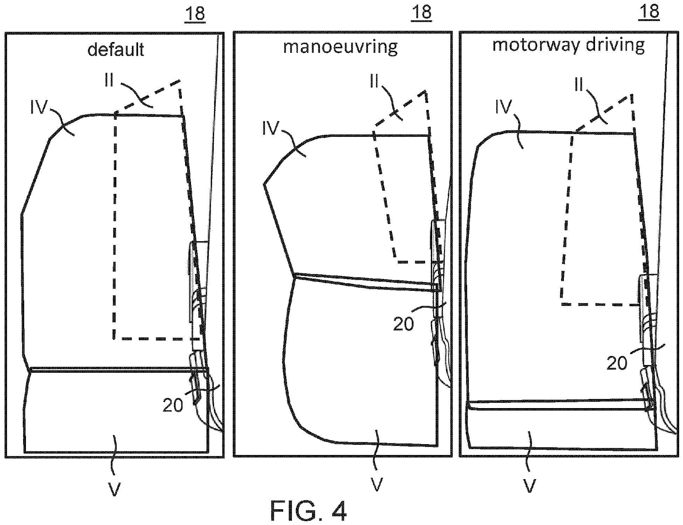

In the default mode, the image data processing device 16 may be configured to generate a combined view of the received image data (in a single image). For this, different field of views contained in the received image data may be merged. In particular, as shown for example in Figure 4, the class II, IV and V view image data may be combined and/or adjoined to each in a single image. In this context, the image data or processed image data may comprise (e.g. perspective) distortions and/or deformations.

The reverse driving mode may be selected by the image data processing device 16, when the received situation-signal indicates reverse driving of the vehicle 20. In the reverse driving mode, the image data processing device 16 may be configured to generate a wide-angle view of the received image data. Preferably the received image data may comprise rearward image data (e.g. captured by a rear camera). Particularly preferred, only rearward image data is processed during the processing step in the reverse driving mode. In the reverse driving mode, the image data processing device 16 may further be configured to increase a contrast, brightness and/or digital gain of the received image data compared to a contrast, brightness and/or digital gain in the default mode.

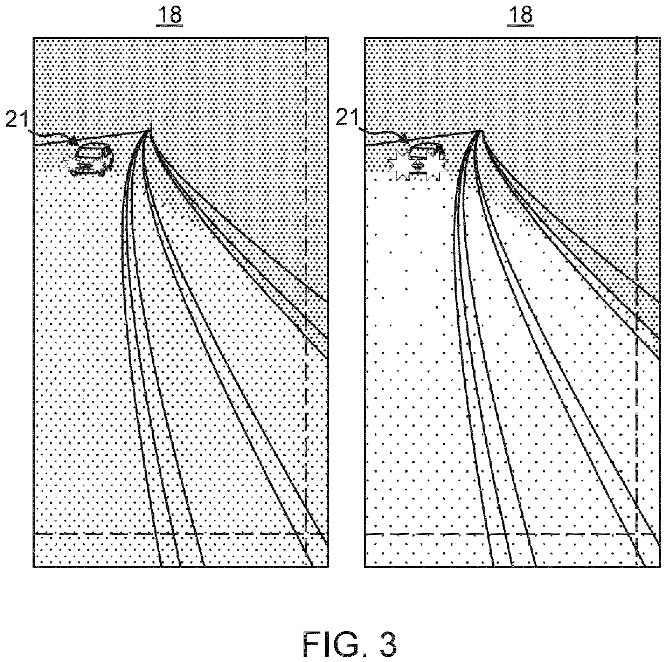

The motorway driving mode, which is illustrated in Figure 3 and 4, may be selected by the image data processing device 16, when the received situation-signal indicates motorway driving of the vehicle 20. In the motorway driving mode, the image data processing device 16 may be configured to generate a zoom view of the received image data. The term zoom view may, for example, refer to a view focussing on a specific portion of the captured image data, e.g. relating to a specific portion of the external environment of the vehicle 20. The zoom view may include an enlarged and/or magnified representation of parts of the captured image data. As shown in Figure 4, in the motorway driving mode, the class V view may be decreased (e.g. reduced) compared to the default mode and /or the manoeuvring mode. The received image data may be processed such that the information on the front and the lateral vehicle's surroundings is minimized and the information on the rear vehicle's surroundings is maximized. In the motorway driving mode, the image data processing device 16 may further be configured to decrease a contrast, brightness and/or digital gain of the received image data compared to a contrast, brightness and/or digital gain in the default mode.

The manoeuvring mode may be selected by the image data processing device 16, when the received situation-signal indicates a manoeuvring of the vehicle 20. In the manoeuvring mode, the image data processing device 16 may be configured to generate a wide-angle view of the received image data. Thereby, as shown in Figure 4, the class V view may be increased (e.g. magnified) compared to the default mode and/or motorway driving mode. In addition, the class IV view and/or class II view may be decreased (e.g. reduced) compared to the default mode and/or motorway driving mode. Further, in the manoeuvring mode, the image data processing device 16 may further be configured to increase a contrast, brightness and/or digital gain of the received image data compared to a contrast, brightness and/or digital gain in the default mode. Thereby, the coupling may be asymmetrical, i.e. the contrast may be increased much stronger (for manoeuvring) than it can be decreased (for motorway driving and/or long-distance drives).

Further, the vehicle 20 may comprise a display device 18. The display device 18 may be connected with the image data processing device 16, e.g. by a respective signal connection (dotted line). The display device 18 may be part of the vision system 10 of the vehicle 20. Thus, the vision system 10 may further comprise the display device 18.

The display device 18 may be configured to display the processed image data (e.g. in real-time, i.e. the situation displayed on the display device 18 preferably corresponds to the actual situation outside the vehicle 20). The display device 18 may be configured to receive the processed image data from the image data processing device 16. The display device 18 may comprise a display (e.g. a LCD display) and/or monitor. The display and/or monitor may be a touch sensitive (e.g. configured as a touch screen). The processed image data may be displayed on a monitor and/or display of the display device 18.

The display device 18 may be arranged at a dashboard of the vehicle 20. Alternatively, the display device 18 may be arranged at an A-pillar of the vehicle 20. The display device 18 and/or the whole vision system 10 may be part of a mirror replacement system of the vehicle 20. Thus, the display device 18 may be configured to display an area of the vehicle's surroundings usually visible via a (absent) mirror of the vehicle 20. The display device 18 may be permanently active during operation of the vehicle 20. In addition or alternatively, the display device 18 and/or the whole vision system 10 may be operable to display a surround view (or bird's eye view) of the vehicle's surroundings.

The display device 18 may comprise a dimmer to adjust a brightness of the display and/or the monitor of the display device 18. For example, the dimmer may be formed as a knob and/or button at the display device 18. The dimmer may, however, also be formed as a (virtual) key displayed on the (touch sensitive) display and/or monitor. The display device 18 may be configured to generate and/or output a display-brightness-signal. The display-brightness-signal, thereby, may indicate a (current) brightness of the display and/or monitor of the display device 18. For example, the display-brightness-signal may be proportional to a displacement or setting of the dimmer. The display-brightness-signal may, in particular, indicate a brightness of a backlight of a display and/or monitor of the display device 18. In particular, the image data processing device 16 may be configured to process the received image data dependent on the received display-brightness-signal. Thus, the image data processing device 16 may be configured to process the received image data differently depending on the received display-brightness-signal. For example, the image processing settings may be coupled with the dimmer, i.e. the manual brightness adjustment of the display. In particular, the image data processing device 16 may be configured to increase a contrast of the received image data, when the display-brightness-signal indicates an increase of the brightness of the display and/or to decrease a contrast of the received image data, when the display-brightness-signal indicates a decrease of the brightness of the display. In addition or alternatively, the display-brightness-signal may be coupled asymmetrically to the image processing settings.

Further, the display device 18 and/or the vehicle 20 may comprise a control device 17. For example, the control device 17 may include one or more of a touchscreen, a button, or a switch. The control device 17 may be arranged at and/or integrated in the display device 18. Thus, the control device 17 may be part of the vision system 10 of the vehicle 20.

The control device 17 may be configured to generate and/or output a user-request signal, e.g. based on inputs and/or actuations of the control device 17. The user-request signal may indicate a command and/or request of a user, e.g. associated with the (post-)processing of the received image data. For example, the user-request signal may indicate a selection and/or adjustment of an image data processing mode; a change of image processing settings; and/or a change and/or selection of a view (e.g. a zoom or wide-angle view).

In this context, the image data processing device 16 may be configured to process the received image data dependent on the received user-request signal. Thus, the processing of the image data processing device 16 may be actively altered and/or adjusted by a user. The image data processing device 16 may be configured to adjust image processing settings dependent on the received user-request signal. In addition or alternatively to an automatic adjustment, the driver can thus preferably control the extent of the image processing settings manually. For example, the image processing settings of the night mode may be adjusted manually by the driver.

For example, the image data processing device 16 may be configured to adjust the selected image data processing mode dependent on the received user-request signal and/or to select another image data processing mode dependent on the received user-request signal. By way of example only, the user may (manually) request a change of the reverse driving mode to the manoeuvring mode, e.g. by performing a corresponding control action at the control device 17 (e.g. by pressing a manoeuvring mode button of the control device 17). The control device 17 may then generate and output a respective user-request signal, indicating the afore-mentioned change of the image data processing mode, and the image data processing device 16 may be configured to change the respective image data processing mode based on the received user-request signal.

In addition or alternatively, the image data processing device 16 may be configured to adjust the contrast, digital gain, noise filtering, white balance, luminance, brightness, and/or sharpness of the received image data dependent on the received user-request signal. By way of example only, the user may (manually) request a change of the contrast of the (displayed) image data, e.g. by performing a corresponding control action at the control device 17 (e.g. by operating a contrast key of the control device 17). The control device 17 may then generate and output a respective user-request signal, indicating the afore-mentioned change of the contrast, and the image data processing device 16 may be configured to change the contrast of the received image data based on the received user-request signal.

In addition or alternatively, the image data processing device 16 may be configured to adjust a section of the received image data to be displayed dependent on the received user-request signal. For example, the image data processing device 16 may be configured to adjust an image range and/or view generated from the received image data to be displayed dependent on the received user-request signal. In particular, the image data processing device 16 may be configured to generate a zoom view or wide-angle view of the received image data dependent on the received user-request signal. By way of example only, the user may (manually) request a change of the view of a currently (displayed) zoom view to a wide-angle view, e.g. by performing a corresponding control action at the control device 17 (e.g. by pressing a wide-angle view button of the control device 17). The control device 17 may then generate a respective user-request signal, indicating the afore-mentioned view change, and the image data processing device 16 may be configured to generate a wide-angle view of the received image data based on the received user-request signal.

Figure 2 shows an example of processed image data (e.g. displayed on the display device 18) in the default mode. Thereby, the left and right image illustrate the same captured situation or received image (raw) data, however with different image processing settings used in the processing of the received image data. For reasons of representability, the differences primarily concern the image brightness, although this is not meant to limit the subject-matter in any way. As can be seen, both processed image data exemplarily show a view of a street of an inner city at night, wherein in this exemplary case the received image data comprise rearward image data. By way of example, parts of the side face of the vehicle 20 are visible on the respective left parts of the left and right image. By comparing the respective images, it can be seen that in the left image basically only the street 22 is visible, which is illuminated by another vehicle 21 behind vehicle 20, while the surrounding of the street 22 is quite dark. In the right image, the image processing settings are changed, such that the overall brightness of the image is increased and more details of the surrounding of the street 22 (e.g. parking cars) may be better recognized. By default, only a standard setting of the image processing settings may be used (e.g. the settings resulting in the left or right image). However, it may be possible for the driver, e.g. via the control device of the vehicle and/or the vision system of the vehicle, to manually adjust the image processing settings, resulting in this exemplarily case in the respective other image (right or left). Moreover, it should be mentioned again, that also other image processing settings, like a contrast, digital gain and/or a sharpness of the received image data may be altered, which are however difficult to represent in a line drawing.

Figure 3 shows an example of processed image data (e.g. displayed on the display device 18) in the motorway driving mode. Again, here the left and right image illustrate the same captured situation or received image (raw) data, however with different image processing settings used in the processing of the received image data. Like in the case of Figure 2, the different image processing settings mainly concern the image brightness for reasons of representability, although this is not meant to limit the subject-matter in any way. As can be seen, both processed image data exemplarily show a zoom view of a motorway situation at night, wherein in this exemplary case the received image data comprise rearward image data. By comparing the respective images, it can be seen that in the left image that another vehicle 21 driving behind the vehicle 20 is visible, the driver, however, is not excessively dazzled by the light from the other vehicle 21, as the overall brightness is reduced. In contrast to that, in the right image, the image processing settings are changed, such that the overall brightness of the image is increased, resulting in a very bright image being displayed on the display device 18. By default, a standard setting of the image processing settings may be used (e.g. the settings resulting in the darker left image). However, it may be possible for the driver, e.g. via the control device of the vehicle and/or the vision system of the vehicle, to manually adjust the image processing settings, resulting in this exemplarily case in the right image. Moreover, it should be mentioned again, that also other image processing settings, like a contrast, digital gain and/or a sharpness of the received image data may be altered, which are however difficult to represent in a line drawing.

Figure 4 shows schematic representations of processed image data in the default, manoeuvring, and motor driving mode, wherein the processed image data comprises different field of views. In this example, the processed image data (and the received image data) comprises image data related to a class II view, a class IV view, and a class V view of the vehicle's surroundings according to the Directive 2003/97/EC and 2007/38/EC. In the step of processing, the different field of views may be merged to a combined view, wherein the relative portions of the different field of views in the combined view may vary according to the respective image processing mode. For example, in the manoeuvring mode, the portion of the class V view may be increased compared to the default mode. Consequently, the (identical) class V view or class V view image data may be displayed larger on the display device 18 as in the default mode. Further, the portion of the class IV view and class II view may be decreased compared to the default mode. Thus, the class II and class IV views may be displayed smaller on the display device 18 compared to the situation in the default mode. In addition or alternatively, in the motorway driving mode, the portion of the class V view may be decreased (e.g. reduced) compared to the default mode. Consequently, here, the class V view or class V view image data may be displayed smaller on the display device 18 as in the default mode.

Although the invention has been described with reference to specific embodiments, it is apparent to one skilled in the art that various modifications may be made and equivalents may be used as substitutes without departing from the scope of the invention. Consequently, the invention is not intended to be limited to the disclosed embodiments, but is intended to encompass all embodiments falling within the scope of the appended claims. In particular, the invention also claims protection for the subject-matter and features of the dependent claims independently of the referenced claims.

### Reference list

- 10: Vision system
- 12: Imaging device
- 14: Condition device
- 15: Situation detection device
- 16: Image data processing device
- 17: Control device
- 18: Display device
- 20: Vehicle
- 21: Other vehicle
- 22: Street

## Claims

1. Method for operating an image data processing device (16) of a vision system (10) of a vehicle (20), comprising:
receiving image data captured by at least one imaging device (12); preferably wherein the image data comprises rearward view image data captured aside and/or behind of the vehicle (20);
receiving a condition-signal indicating a day-time condition or a night-time condition, preferably generated by a condition device (14), e.g. a brightness sensor; and
processing the received image data, preferably comprising adjusting a contrast and/or a brightness of the received image data, dependent on the received condition-signal.

2. Method according to claim 1, wherein the step of processing differs depending on whether the received condition-signal indicates the day-time condition or the night-time condition.

3. Method according to claim 1 or 2, wherein the step of processing comprises:
adjusting a contrast of the received image data; and/or
adjusting a digital gain of the received image data; and/or
adjusting a noise filtering the received image data.

4. Method according to any one of the preceding claims, further comprising:
outputting a control-signal for the at least one imaging device (12) dependent on the received condition-signal, wherein the control-signal causes the at least one imaging device (12) to adjust at least one image capture setting, preferably a frame rate, a gain, an exposure time, and/or exposure threshold, of the at least one imaging device (12).

5. Method according to any one of the preceding claims, further comprising:
receiving, preferably from a situation detection device (15), a situation-signal indicating a current speed, a gear selection and/or an operating state of the vehicle (20); and
wherein the step of processing is further dependent on the received situation-signal.

6. Method according to claim 5, wherein the step of processing comprises:
reducing a contrast, digital gain, and/or brightness of the received image data, when the received situation-signal indicates a long-distance drive of the vehicle (20); and/or
increasing a contrast, digital gain, and/or brightness of the received image data, when the received situation-signal indicates a manoeuvring, preferably a parking procedure, of the vehicle (20).

7. Method according to claim 5 or 6, further comprising:
selecting an image data processing mode from, preferably at least three, particular preferred at least four, predefined possible image data processing modes dependent on the received situation-signal; and
wherein the step of processing is performed in accordance with the selected image data processing mode.

8. Method according to claim 7, wherein the predefined possible image data processing modes include:
a reverse driving mode, preferably comprising generating a wide-angle view of the received image data; and/or
a motorway driving mode, preferably comprising generating a zoom view of the received image data; and/or
a manoeuvring mode, preferably comprising generating a wide-angle view of the received image data.

9. Method according to claim 8, wherein:
the predefined possible image data processing modes further include a default mode, preferably an inner-city driving mode; wherein:
the reverse driving mode defines a higher contrast, brightness and/or digital gain compared to the default mode; and/or
the motorway driving mode defines a lower contrast, brightness and/or digital gain compared to the default mode; and/or
the manoeuvring mode defines a higher contrast, brightness and/or digital gain compared to the default mode.

10. Method according to any one of the preceding claims, wherein:
the received image data comprises data relating to different field of views, preferably a class II view, a class IV view and/or a class V view; and
the step of processing comprises merging the different field of views in a combined view.

11. Method according to claim 10, when dependent on any one of the claims 7 to 9, wherein:
relative portions of the different field of views in the combined view are varied depending on the selected image data processing mode, preferably wherein:
in the motorway driving mode, the class V view is decreased compared to the default mode; and/or
in the manoeuvring mode, the class V view is increased compared to the default mode.

12. Method according to any one of the preceding claims, further comprising:
receiving a display-brightness-signal from a display device (18), wherein the display-brightness-signal indicates a brightness of a display of the display device (18), preferably a brightness of a backlight of a display of the display device (18);
wherein the step of processing is performed dependent on the received display-brightness-signal, preferably such:
that a contrast of the received image data is increased when the display-brightness-signal indicates an increase of the brightness of the display and/or
that a contrast of the received image data is decreased when the display-brightness-signal indicates an decrease of the brightness of the display.

13. Method according to any one of the preceding claims, further comprising:
receiving a user-request signal; and
adjusting image processing settings dependent on the received user-request signal, preferably:
a) selecting another image data processing mode and/or adjusting the selected image data processing mode dependent on the received user-request signal; and/or
b) adjusting a contrast, digital gain, and/or noise filtering of the received image data dependent on the received user-request signal; and/or
c) adjusting a section of the received image data to be displayed dependent on the received user-request signal.

14. Vision system (10) for a vehicle (20), comprising:
at least one imaging device (12) configured to capture image data, preferably comprising rearward view image data captured aside and/or behind of the vehicle (20);
a condition device (14), preferably a brightness sensor, wherein the condition device (14) is configured to generate a condition-signal indicating a day-time condition or a night-time condition;
an image data processing device (16), wherein the image data processing device (16) is configured to receive the captured image data and the generated condition-signal, and is further configured to process the received image data dependent on the received condition-signal, preferably wherein the image data processing device (16) is configured to perform a method according to any one of the preceding claims.

15. Vision system (10) according to claim 14, further comprising:
a display device (18) configured to display the processed image data, preferably wherein the display device (18) comprises a display, configured for simultaneously displaying a class II view, a class IV view and a class V view.

16. Vehicle (20), preferably utility vehicle, comprising:
a vision system (10) according to claim 14 or 15.

17. Vehicle (20), according to claim 16, wherein:
the least one imaging device (12), is configured to capture different field of views, preferably a class II view, a class IV view and/or a class V view; and/or
the vision system (10) is part of a mirror replacement system of the vehicle; and/or
the vision system (10) is operable to display a surround view of the vehicle's surroundings on the display device (18).
